# EUROPEAN PATENT SPECIFICATION

(11) **EP 3 895 836 B1**
(45) Date of publication and mention of the grant of the patent: **22.02.2023**
(21) Application number: 21167855.2
(22) Date of filing: 12.04.2021
(51) Int. Cl.: B23K 11/11, B23K 11/31

(54) **WELDING APPARATUS**
SCHWEISSVORRICHTUNG
APPAREIL DE SOUDAGE

(30) Priority: 16.04.2020 IT 202000008053
(43) Date of publication of application: 20.10.2021
(73) Proprietor: Tecna S.p.A., 40024 Castel San Pietro Terme (BO) (IT)
(72) Inventor: BERGAMI, Damiano, 40023 Castel Guelfo di Bologna BO (IT); BELLUZZI, Dante, 40132 Bologna (IT)
(74) Representative: Modiano, Micaela Nadia

(56) References cited:
- CN-U- 207 171 200
- FR-A- 1 493 981
- JP-A- 2018 071 769
- US-A- 4 812 612

## Description

The present invention relates to a welding apparatus according to the preamble of claim 1 (see for example CN 207 171 200 U).

As is known, the term "resistance welding" identifies a wide category of methods, in which the material to be welded is heated by electrical resistance.

More precisely, such technique provides for pressing an electrode against an area of interest of the parts to be welded and then causing the electrode and the parts to be crossed by electric current; said electric current causes the localized heating of the area of interest up to the melting of the material involved by Joule effect, which indeed allows to obtain the desired welding.

The technique identified above is implemented by a rather wide and heterogeneous range of welding apparatuses; in one of these, a fixed portal structure supports a pneumatic cylinder the stem of which moves along a vertical axis and carries the welding electrode at its free end, directed downwards.

In this application, therefore, the stem of the pneumatic cylinder presses the electrode against the parts of interest, appropriately positioned on a reference plane located below the cylinder, in order to obtain the desired welding.

This embodiment, however, is not free of drawbacks, which are particularly evident in those applications in which the stem is required to apply a high pressure. In fact, because of the known limitations of pneumatics, apparatuses based on this technology can reach high pressure values only by resorting to particularly complex and bulky structures, which typically require a plurality of mutually cooperating stems.

These are obviously solutions that require large spaces and high expenditures and, indeed because of their intrinsic structural complexity, are often unreliable or in any case require frequent maintenance interventions.

The aim of the present invention is to solve the problems described above, providing a welding apparatus capable of applying even high thrusts and pressures on the parts to be welded.

Within this aim, an object of the invention is to provide a welding apparatus that has small space occupation and structural simplicity, while ensuring the possibility to generate high pressures on the parts to be welded.

Another object of the invention is to provide a welding apparatus that ensures high reliability in operation with no risk of contamination of the welded parts.

Another object of the invention is to propose a welding apparatus that uses a technical and structural configuration that is alternative to those of apparatuses of the known type.

Another object of the invention is to provide a welding apparatus that can be obtained easily starting from commonly commercially available elements and materials.

Yet another object of the invention is to provide a welding apparatus that has low costs and is of assured application.

This aim and these and other objects which will become better apparent hereinafter are achieved by a welding apparatus according to claim 1.

Further embodiments of the present invention are defined in the appended claims.

Further characteristics and advantages of the invention will become better apparent from the description of a preferred but not exclusive embodiment of the welding apparatus according to the invention, illustrated by way of non-limiting example in the accompanying drawings, wherein:
Figure 1 is a perspective view of the welding apparatus according to the invention;

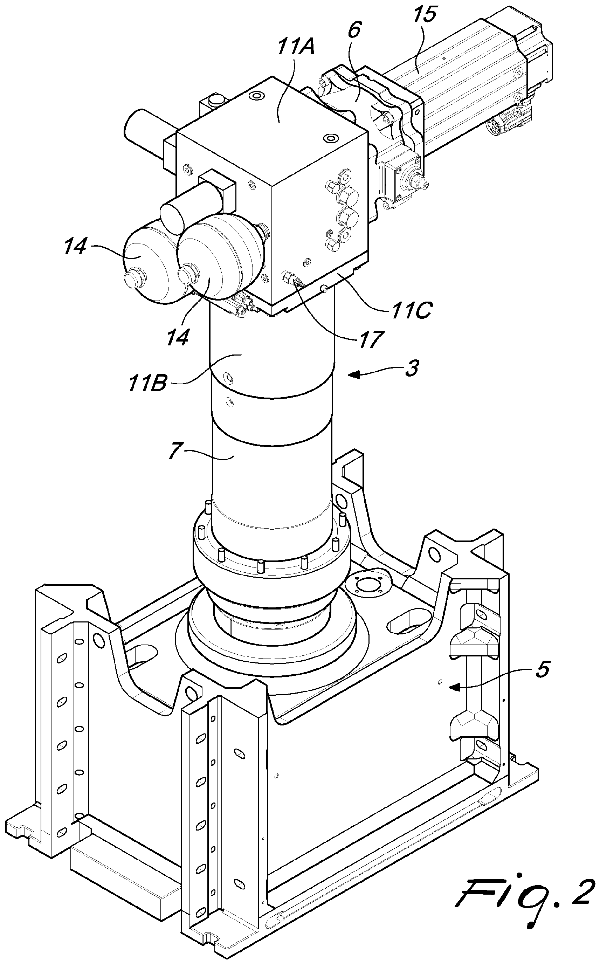

Figure 2 is a perspective view of the movement assembly of the apparatus of Figure 1;

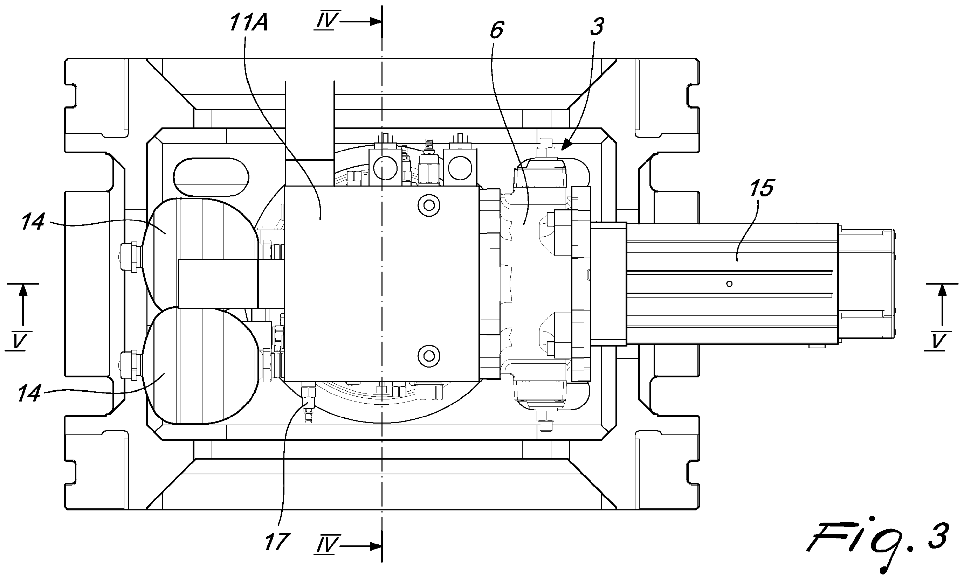

Figure 3 is a top view of the assembly of Figure 2;
Figures 4 and 5 are sectional views of Figure 3, taken along the planes IV-IV and V-V, respectively;

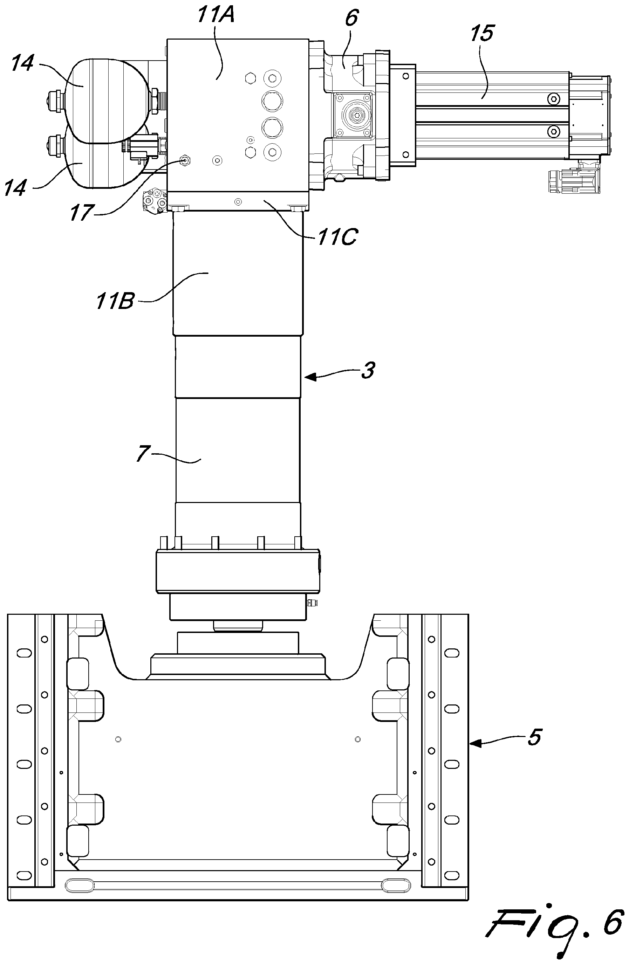

Figure 6 is a front elevation view of the assembly of Figure 2.

With particular reference to the above figures, the reference numeral 1 generally designates a welding apparatus, which comprises a fixed supporting structure 2 for an assembly 3 for the movement of at least one electrode. The electrode can be crossed by current for performing welding treatments on two or more parts to be mutually welded which are indeed arranged along the trajectory of movement (alternating translational motion) of the electrode.

More precisely, in per se known manners, the structure 2 defines a supporting surface 4 on which it is possible to arrange the parts to be welded (a pair of metallic plates, for example) and which in practice is arranged along (or at the end of) the stroke allowed to the electrode, so that the electrode can press against the parts and, crossed by current, provide the welding. The surface 4 can act as a second electrode or in any case the parts themselves can allow the flow of current.

Typically, the at least one electrode is mounted on a respective electrode supporting element, which can be of any type and which, for example, can be constituted by a movable chamber 5 (moved indeed by the assembly 3, to which it is coupled), which can accommodate internally the components necessary for the generation and/or passage of current, as well as any other members designed for the actuation and/or adjustment of the welding treatment.

However, these are per se known techniques which will not be dwelt upon hereinafter.

It should be specified that in the preferred application, the apparatus 1 is configured to perform resistance welding treatments (in the various known types), according to which the parts to be welded are heated indeed by electrical resistance while the electrode presses them against the surface 4 (or, more generically, they are clamped between corresponding electrodes).

However, the possibility that the apparatus 1 according to the invention might be used to perform welding treatments of another type, such as for example atomic diffusion welding, is provided.

According to the invention, the movement assembly 3 comprises a hydraulic pump 6 for the actuation of a linear hydraulic (double-acting) actuator. The actuator comprises a hollow cylinder 7 which is rigidly supported (directly or indirectly) by the structure 2 and forms inside it a compartment 7a for the at least partial accommodation of a piston 8. The piston 8 (with one of its ends) supports even indirectly the electrode and can move with an alternating rectilinear motion in order to press said electrode against the parts to be welded (previously arranged on the surface 4). In other words, in per se known manners, the piston 8 slides alternately into the compartment 7a, exiting from it at least partially with its end to which the electrode is coupled, directly or indirectly (in the latter case, for example by means of the interposition of the electrode supporting element).

The actuator is activated by the pump 6 by means of a closed hydraulic actuation circuit which is filled with a liquid: in this regard, it is specified that in the preferred application the liquid is oil (or a mixture which comprises it), but filling the actuation circuit with another liquid is not excluded, without thereby abandoning the protective scope claimed herein.

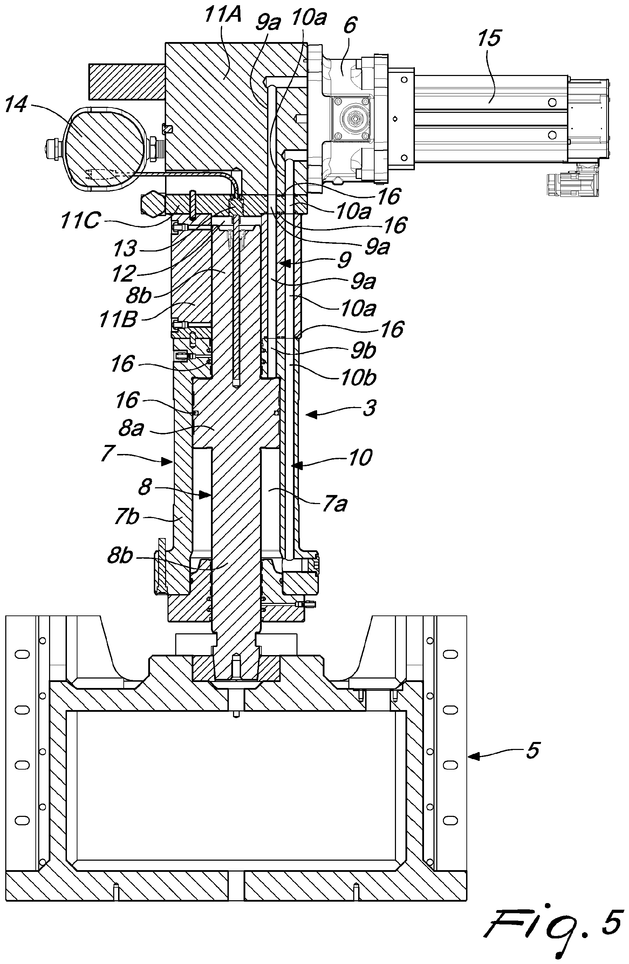

The actuation circuit comprises the pump 6, the compartment 7a, a delivery duct 9 and an intake duct 10 (the ducts 9, 10, which are clearly shown in Figure 5, are substantially parallel and interposed between the pump 6 and the compartment 7a).

The ducts 9, 10 are constituted respectively by one or more pairs of distinct intermediate channels 9a, 10a and by a pair of distinct terminal channels 9b, 10b. In other words, each duct 9, 10 is constituted by one or more intermediate channels 9a, 10a (mutually arranged in series) and by a terminal channel 9b, 10b (also arranged in series to the contiguous intermediate channel 9a, 10a).

As can be seen also from Figure 5, the intermediate channels 9a, 10a of each pair are substantially mutually parallel inside a corresponding perforated block (typically a metallic one) 11A, 11B, 11C, which in turn is interposed between the pump 6 and the cylinder 7 (the number of blocks 11A, 11B, 11C is equal to the number of pairs of intermediate channels 9a, 10a).

Likewise, the terminal channels 9b, 10b are substantially mutually parallel in the side wall 7b of the cylinder 7 (therefore in the "thickness" of the latter) and lead to the compartment 7a (on opposite sides of the latter).

Therefore, it should be noted that the entire actuation circuit has no piping and no associated fittings.

In particular, the apparatus 1 comprises first of all at least one first perforated adjustment block 11A, which is rigidly coupled to the structure 2 and is arranged adjacent to (or in contact with) the pump 6.

The first block 11a, which is substantially a (solid) metallic body in which the necessary holes are indeed provided, is in fact of the type of the components known on the market as "hydraulic blocks" or "manifolds"; it has a first pair of intermediate channels 9a, 10a, which are part of the delivery duct 9 and of the intake duct 10, respectively.

As is the case with commercially known "hydraulic blocks", the first block 11A supports one or more valves which define a hydraulic circuit for the management of the liquid inside the ducts 9, 10 (the first block 11A may also support any other hydraulic components that the person skilled in the art may deem useful for optimum operation). These elements can be integrated inside the first block 11A or be mounted outside, protruding from one of its faces (typically, the first block 11A is substantially shaped like a parallelepiped).

In the preferred embodiment, shown in the accompanying figures by way of example without limiting the protective scope claimed herein, the apparatus 1 also comprises a second perforated connecting block 11B which is interposed between the first block 11A and the cylinder 7. The second block 11B preferably has a cylindrical shape and is also made of metal.

In a similar manner to the first block 11A, the second block 11B has a second pair of intermediate channels 9a, 10a, which are part of the delivery duct 9 and of the intake duct 10, respectively.

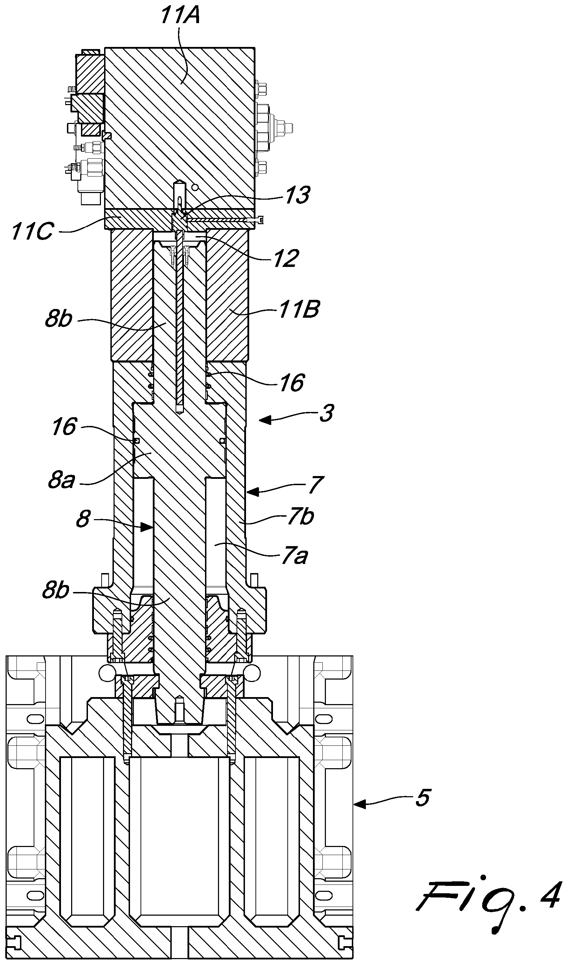

As shown by Figures 4 and 5, the second block 11B is provided with an internal cavity 12 which is aligned with the compartment 7a, thus forming an extension of the latter, for the partial accommodation of the piston 8 during its movement.

Usefully, the apparatus 1 comprises a first transducer 13 which is configured to detect, even indirectly, the position assumed in each instant by the electrode (the indirect detection can be obtained by making the first transducer 13 monitor the position of the piston 8 or of the chamber 5 or in any case of the electrode supporting element, to which the electrode is indeed rigidly coupled).

More particularly, the apparatus 1 comprises a third perforated block 11C, which is interposed between the first block 11A and the second block 11B and is substantially constituted by a plate (preferably made of steel or other metal) which indeed has a third pair of intermediate channels 9a, 10a, which are part of the delivery duct 9 and of the intake duct 10, respectively.

The third block 11C accommodates (at least partially) inside it (in an additional recess) the first transducer 13, which is preferably but not exclusively chosen of the type of an electronic linear transducer.

In the preferred embodiment, the apparatus 1 is therefore provided with three blocks 11A, 11B, 11C, each of which has a respective pair of intermediate channels 9a, 10a containing the liquid.

The third block 11C is integral with the cylinder 7 by means of screws or tension elements which pass through the second block 11B while other screws or similar stable connecting members secure with a rigid coupling the first block 11A to the third plate 11C.

It is stressed, in any case, that the blocks 11A, 11B, 11C (and therefore the pairs of intermediate channels 9a, 10a) can be in any number (one or more), without abandoning the protective scope claimed herein.

Usefully, the apparatus 1 comprises at least one hydraulic accumulator 14, which is mounted on one of the blocks 11A, 11B, 11C and is connected to the actuation circuit (in the accompanying figures, the apparatus 1 comprises two accumulators 14 which are mounted on the first block 11A).

The accumulator 14 is configured to accumulate and release liquid (from and toward the actuation circuit), with consequent compensation of unwanted flow rate variations of the liquid inside said actuation circuit (or in any case to supply additional quantities of oil or other liquid that might be necessary).

According to the present invention, shown in the accompanying figures, the piston 8 is constituted by an axially symmetrical stem which is provided with a central portion 8a that has an enlarged transverse cross-section and two terminal portions 8b that have the same dimensions and are arranged on opposite sides with respect to the central portion 8a. The central portion 8a is kept in hermetic contact against the internal surface of the cylinder 7; thus, the central portion 8a divides the compartment 7a (and, in practice, also the actuation circuit) into two separate volumes, which do not mutually communicate directly and to which the delivery duct 9 and the intake duct 10 lead respectively, being alternately filled by the pressurized liquid, in order to cause the desired alternating movement of the piston 8.

As can be deduced from the accompanying figures (which show the piston 8 in one of the two extreme positions, particularly the one opposite to the one in which welding of the parts can occur), a terminal portion 8b, supporting the electrode supporting element and therefore the electrode itself, moves inside (being able to exit from it at least partially) the compartment 7a of the cylinder 7, while the other terminal portion 8b moves inside the compartment 7a and the cavity 12.

The particular shape of the stem described above, which gives it a symmetry with respect to the longitudinal axis and also a transverse symmetry, with respect to the central portion 8a, is of extreme practical interest, for the reasons that will be illustrated hereinafter.

In one embodiment of the invention (shown moreover in the accompanying figures), the fixed structure 2 (of the "portal" type) comprises a framework that has a substantially parallelepiped shape and comprises a base section 2a, four pillars 2b which extend from the base section 2a substantially at respective edges of the framework, and an upper section 2c, which supports the pump 6.

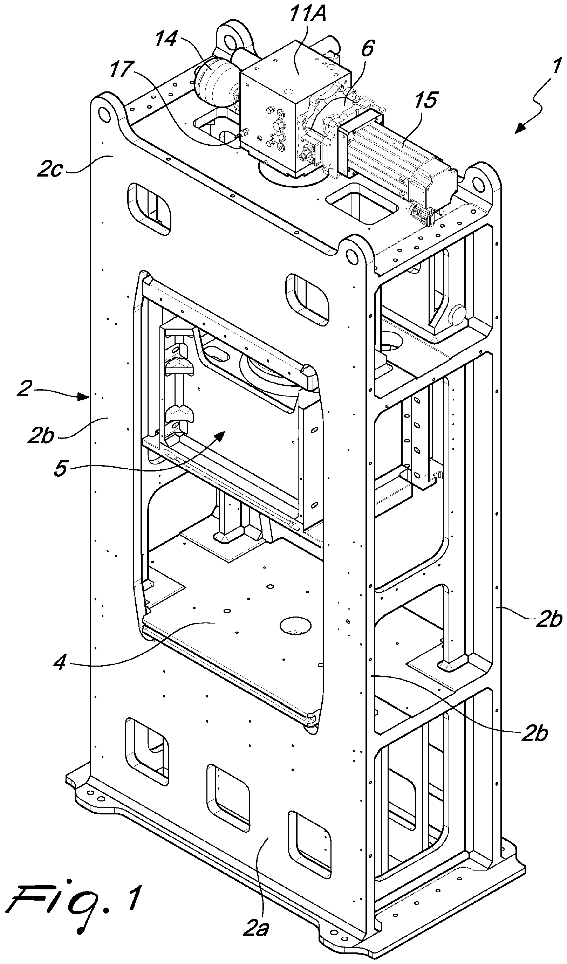

In practice, therefore, it is indeed between the four pillars 2b (which are monolithic with the base section 2a and the upper section 2c) that a void is defined in which the movement assembly 3 is arranged and the piston 8 moves. It should be specified in any case that this configuration, shown in Figure 1 and capable of giving high rigidity to the assembly, allowing to withstand great stresses and therefore to apply considerable pressures to the parts to be welded, is only one possible embodiment of the structure 2. In fact, the apparatus 1 can first of all comprise horizontal or inclined structures 2 (i.e., therefore, such that the longitudinal axis of the actuator is parallel or oblique to the ground and not perpendicular as in the accompanying figures). Furthermore, the structure 2 is not necessarily chosen of the above described "portal" type; in fact, it can for example be C-shaped or gooseneck-shaped (still with a monolithic framework, for example, or not), with supporting posts, uprights with preloaded posts, etcetera.

The protection claimed herein extends also to any type of hydraulic pump 6 and to any motor element designed to actuate it.

In the preferred embodiment, in any case, the assembly 3 comprises a servomotor 15, preferably of the brushless type, which is configured for the control and activation of the pump 6, which in turn is preferably chosen of the reversible rotary type with four quadrants with a displacement chosen between fixed and variable. In this context, therefore, the pump 6 (in practice a servo pump), according to the rotation rate and the direction of rotation (right-left) causes the alternating movement and the speed of movement of the piston 8, directly and without the interposition of flow rate regulating directional electric valves.

Usefully, the apparatus 1 comprises hermetic sealing means, such as O-rings 16 and the like. The hermetic sealing means are interposed between the cylinder 7 and the piston 8 and between adjacent channels 9a, 10a, 9b, 10b of each duct 9, 10.

Advantageously, the apparatus 1 comprises at least one pressure transducer 17 (typically an electronic one), which is mounted on the first block 11A.

The operation of the welding apparatus according to the invention is as follows.

As shown, the electrode supporting element (be it the chamber 5 or others), which supports at least one electrode, is provided with the possibility of alternating rectilinear motion by virtue of the piston 8 to which it is coupled. In this way, the apparatus 1 behaves like a press and the electrode, when it reaches or moves towards one of its extreme positions, is indeed brought under pressure against two parts placed on the surface 4 previously, allowing to provide the welding of said parts (according to various techniques, such as for example resistance welding, atomic diffusion welding, or others).

The methods and the elements involved in the execution of the welding are per se of the traditional type; what is peculiar in the invention is, first of all, the innovative choice to resort to a hydraulic (preferably oil-pressure controlled) actuation of the assembly 3 which moves the electrode by means of the electrode supporting element.

In fact, as shown, the assembly 3 provides in this regard a linear hydraulic actuator (pressing and double-acting), connected to a hydraulic pump 6 through a closed actuation circuit filled with a liquid. The thrust provided by the liquid, generated in turn by the pump 6, allows indeed to push the piston 8 in its delivery stroke (toward the parts to be welded) and return stroke (toward the extreme position in which the piston 8 is closer to the pump 6, as in Figures 4 and 5).

The use of a closed hydraulic actuation circuit allows, first of all, to generate high pressures at the electrode without resorting to the otherwise necessary structural complications and oversizing, using pneumatic actuation systems as occurs in the known solutions. The invention can in fact impart to the electrode forces of 50 tons and more.

A further particularly innovative aspect of the invention resides in that the actuation circuit comprises, besides the pump 6 and the compartment 7a of the cylinder 7, only a delivery duct 9 and an intake duct 10, the provision of which does not use any pipes (and corresponding fittings), since they are entirely contained in the blocks 11A, 11B, 11C and in the side wall 7b of the cylinder 7. In other words, the ducts 9, 10 are entirely obtained from holes provided in (metallic) blocks 11A, 11B, 11C (which indeed form the pairs of intermediate channels 9a, 10a in parallel) and directly in the thickness of the cylinder 7. The perfect static seal of this particular system is ensured by the presence of the O-rings 16.

The movement of the piston 8 (and therefore of the electrode) is entrusted to the pump 6, which propels the oil (or other liquid) into the ducts 9, 10 which fills them. In this regard, the choice to use a stem provided with two mutually symmetrical terminal portions 8b with respect to the central portion 8a allows to significantly contain the quantity of oil (or other liquid) circulating inside the apparatus 1. In fact, in the ascent or descent stroke (or in any case delivery or return stroke) identical volumes of the piston 8 are available: consequently, the oil in output from the compartment 7a (from a section thereof) during the stroke in one direction feeds the intake of pump 6 by an amount that corresponds to the delivery of the latter. In practice, therefore, in order to activate the actuator, no amount of oil (liquid) besides the one normally contained in the ducts 9, 10 is needed and it is not necessary to have additional tanks (the ducts 9, 10 act as tanks). In this regard, anyway, the presence of the accumulator 14 allows to compensate for any leaks of liquid in the actuation circuit.

Therefore, by virtue of the hydraulic (oil-pressure controlled) actuation, the invention achieves its first aim, i.e., to allow the provision of a welding apparatus 1 capable of applying even high thrusts and pressures to the parts to be welded (despite high structural simplicity and in any case reduced space occupations).

It is noted once again that the apparatus 1 has no pipes and corresponding fittings (as well as proportional electric valves or directional servo valves); this particularity, combined with the fact that the ducts 9, 10 are obtained through direct connections between the various channels 9a, 10a, 9b, 10b, achieves further important objects. In fact, the actuation circuit has very low load losses (and no vibrations or inconstancy of movements, as instead might happen by using pipes), with a consequent increase in the dynamics of the entire system and a substantial reduction in energy consumption (with benefits in terms of product cost).

Indeed, the direct connections, the provision inside the perforated blocks 11A, 11B, 11C and the wall 7b of the cylinder 7, using O-rings 16 and similar hermetic sealing means, reduces or eliminates the risk of oil seepage and leaks, ensuring high reliability of operation, without risk of contamination of the welded parts or in any case of the surrounding environment.

In other words, all those defects that sometimes persons skilled in the art and operators in the field of reference consider inextricably linked to oil-pressure controlled applications are completely absent in the invention.

The use of a servomotor 15 and a pump 6 (in practice, a servo pump) of the type indicated in the preceding pages is also of particular practical interest. In fact, the circuit system thus obtained, with a reversible-delivery (servo)pump driven by a brushless servomotor 15, can be combined with a closed-loop axis management system (which makes use, among other information, of the information gathered by the first transducer 13 and by the pressure transducer 17) and this allows total and constant control of the actuator and of the position of the piston 8 in particular, in terms of position (up to ±0.025 mm and over) and force (up to ±0.7% bar and over), while the speed can be adjusted easily and finely (from 0.5 to maximum) thanks to control of the rotation of the servomotor 15, which is capable of producing the rotation rate necessary to move only the mass of oil required by the actuator. As shown, for optimum control of the forces involved it is possible to resort to a system which uses one or more electronic pressure transducers 17 (preferably but not exclusively mounted on the first block 11A).

Finally, it should be noted that by choosing high-quality components from those available on the market, the apparatus 1 is able to ensure high cycle-production repeatability (±0.012 mm for position, ±0.15% for force, ±0.25% for speed).

The invention thus conceived is susceptible of numerous modifications and variations, all of which are within the scope of the present invention as defined in the appended claims.

## Claims

1. A welding apparatus, comprising a fixed supporting structure (2) for an assembly (3) for the movement of at least one electrode, which can be crossed by current in order to perform welding treatments, said movement assembly (3) comprising a hydraulic pump (6) for the actuation of a linear hydraulic actuator, comprising a hollow cylinder (7) which is rigidly supported by said structure (2) and forms internally a compartment (7a) for the at least partial accommodation of a piston (8), which supports even indirectly said at least one electrode and can move with an alternating rectilinear motion in order to press said electrode against the parts to be welded, said actuator being activated by said pump (6) by means of a closed hydraulic actuation circuit which can be filled with a liquid,
**characterised in that**:
the closed hydraulic actuation circuit comprises said pump (6), said compartment (7a), a delivery duct (9) and an intake duct (10), said ducts (9, 10) being constituted respectively by one or more pairs of distinct intermediate channels (9a, 10a), which are substantially mutually parallel correspondingly inside one or more perforated blocks (11A, 11B, 11C) which are interposed between said pump (6) and said cylinder (7), and by a pair of distinct terminal channels (9b, 10b), which are substantially mutually parallel in the side wall (7b) of said cylinder (7) and lead to said compartment (7a),
and **in that** said piston (8) is substantially constituted by an axially symmetrical stem which is provided with a central portion (8a) that has an enlarged transverse cross-section and is kept in hermetic contact against the internal surface of said cylinder (7), and two terminal portions (8b) that have the same dimensions and are arranged on opposite sides with respect to said central portion (8a).

2. The welding apparatus according to claim 1, **characterized in that** it comprises at least one first perforated adjustment block (11A), which is rigidly coupled to said structure (2) and is arranged adjacent to said pump (6), said first block (11A) having a first pair of said intermediate channels (9a, 10a), respectively of said delivery duct (9) and of said intake duct (10), and supporting one or more valves which form a hydraulic circuit for the management of the liquid within said ducts (9, 10).

3. The welding apparatus according to claim 2, **characterized in that** it comprises a second perforated connecting block (11B), which is interposed between said first block (11A) and said cylinder (7) and is provided with a second pair of said intermediate channels (9a, 10a), respectively of said delivery duct (9) and of said intake duct (10), said second block (11B) being provided with an internal cavity (12) that is aligned with said compartment (7a) and forms an extension of said compartment (7a), for the partial accommodation of said piston (8) during its movement.

4. The welding apparatus according to one of the preceding claims, **characterized in that** it comprises a first transducer (13) configured for the optionally indirect detection of the position assumed in each instant by said electrode.

5. The welding apparatus according to claims 3 and 4, **characterized in that** it comprises a third perforated block (11C), which is interposed between said first block (11A) and said second block (11B) and is substantially constituted by a plate which has a third pair of said intermediate channels (9a, 10a), respectively of said delivery duct (9) and of said intake duct (10), said third block (11C) accommodating internally said first transducer (13), which is preferably chosen of the type of an electronic linear transducer.

6. The welding apparatus according to one of the preceding claims, **characterized in that** it comprises a hydraulic accumulator (14), which is mounted on one of said blocks (11A, 11B, 11C) and is connected to said actuation circuit, said accumulator (14) being configured at least for the accumulation and release of liquid under pressure and the consequent compensation of unwanted flow rate variations of the liquid inside said actuation circuit.

7. The welding apparatus according to one of the preceding claims, **characterized in that** said fixed structure (2) comprises a framework that has a substantially parallelepiped contour and comprises a base section (2a), four pillars (2b) which extend from said base section (2a) substantially at respective edges of said framework, and an upper section (2c), which supports said pump (6).

8. The welding apparatus according to one of the preceding claims, **characterized in that** said assembly (3) comprises a servomotor (15), preferably of the brushless type, configured for the control and activation of said pump (6), preferably of the reversible rotary type with four quadrants with a displacement chosen between fixed and variable.

9. The welding apparatus according to one of the preceding claims, **characterized in that** it comprises hermetic sealing means, such as O-rings (16) and the like, which are interposed between said cylinder (7) and said piston (8) and between adjacent channels (9a, 10a, 9b, 10b) of each one of said ducts (9, 10).

10. The welding apparatus according to one of the preceding claims, **characterized in that** it comprises at least one pressure transducer (17) mounted on said first block (11A).

## Patentansprüche

1. Eine Schweißvorrichtung, die eine feste tragende Struktur (2) für einen Aufbau (3) zur Bewegung mindestens einer Elektrode umfasst, die zur Durchführung von Schweißarbeiten von Strom durchquert werden kann; wobei der Bewegungsaufbau (3) eine Hydraulikpumpe (6) für die Betätigung eines linearen hydraulischen Antriebselements umfasst, das einen Hohlzylinder (7) umfasst, welcher starr von der Struktur (2) getragen ist und innen einen Hohlraum (7a) für die zumindest partielle Aufnahme eines Kolbens (8) ausbildet, der auch indirekt die mindestens eine Elektrode trägt und sich mit einer geradlinigen alternierenden Bewegung bewegen kann, um die Elektrode gegen die zu verschweißenden Teile zu drücken; wobei das Antriebselement von der Pumpe (6) über einen geschlossenen Hydraulikantriebskreis aktiviert wird, der mit einer Flüssigkeit gefüllt werden kann; **dadurch gekennzeichnet, dass**:
der geschlossene Hydraulikantriebskreis die Pumpe (6), den Hohlraum (7a), eine Abgabeleitung (9) und eine Einlassleitung (10) umfasst, wobei die Leitungen (9, 10) jeweils aus Folgendem bestehen: einem oder mehreren Paaren separater Zwischenkanäle (9a, 10a), die entsprechend innerhalb eines oder mehrerer mit Löchern versehener Blöcke (11A, 11B, 11C), die zwischen der Pumpe (6) und dem Zylinder (7) angeordnet sind, im Wesentlichen zueinander parallel sind; und aus einem Paar separater Endkanäle (9b, 10b), welche in der Seitenwand (7b) des Zylinders (7) im Wesentlichen zueinander parallel sind und zu dem Hohlraum (7a) führen;
und dadurch, dass der Kolben (8) im Wesentlichen aus einem axialsymmetrischen Schaft besteht, der mit einem zentralen Abschnitt (8a) versehen ist, welcher einen vergrößerten transversalen Querschnitt hat und in hermetischem Kontakt mit der Innenfläche des Zylinders (7) gehalten wird, und mit zwei Endabschnitten (8b), die dieselben Abmessungen haben und auf Seiten angeordnet sind, die einander mit Bezug auf den zentralen Abschnitt (8a) gegenüberliegen.

2. Die Schweißvorrichtung gemäß Anspruch 1, **dadurch gekennzeichnet, dass** sie mindestens einen ersten perforierten Anpassungsblock (11A) umfasst, welcher starr mit der Struktur (2) gekoppelt und neben der Pumpe (6) angeordnet ist, wobei der erste Block (11A) ein erstes Paar der Zwischenkanäle (9a, 10a) der Abgabeleitung (9) beziehungsweise der Einlassleitung (10) hat und ein oder mehrere Ventile trägt, die einen Hydraulikkreis für die Steuerung der Flüssigkeit in den Kanälen (9, 10) bilden.

3. Die Schweißvorrichtung gemäß Anspruch 2, **dadurch gekennzeichnet, dass** sie einen zweiten, perforierten Verbindungsblock (11B) umfasst, welcher zwischen dem ersten Block (11A) und dem Zylinder (7) angeordnet und mit einem zweiten Paar der Zwischenkanäle (9a, 10a) der Abgabeleitung (9) beziehungsweise der Einlassleitung (10) versehen ist; wobei der zweite Block (11B) mit einem inneren Hohlraum (12) versehen ist, der mit dem Hohlraum (7a) ausgerichtet ist und zur partiellen Aufnahme des Kolbens (8) während dessen Bewegung eine Erweiterung des Hohlraums (7a) bildet.

4. Die Schweißvorrichtung gemäß einem der obigen Ansprüche, **dadurch gekennzeichnet, dass** sie einen ersten Wandler (13) umfasst, konfiguriert für die wahlweise indirekte Erfassung der Position, die zu jedem Zeitpunkt von der Elektrode eingenommen wird.

5. Die Schweißvorrichtung gemäß den Ansprüchen 3 und 4, **dadurch gekennzeichnet, dass** sie einen dritten perforierten Block (11C) umfasst, welcher zwischen dem ersten Block (11A) und dem zweiten Block (11B) angeordnet ist und im Wesentlichen aus einer Platte besteht, die ein drittes Paar der Zwischenkanäle (9a, 10a) der Abgabeleitung (9) beziehungsweise der Einlassleitung (10) hat; wobei der dritte Block (11C) in seinem Inneren den ersten Wandler (13) enthält, welcher vorzugsweise von der Art eines linearen elektronischen Wandlers ist.

6. Die Schweißvorrichtung gemäß einem der obigen Ansprüche, **dadurch gekennzeichnet, dass** sie einen Druckwasserspeicher (14) umfasst, der an einem der Blöcke (11A, 11B, 11C) montiert und mit dem Antriebskreis verbunden ist, wobei der Druckwasserspeicher (14) zumindest für das Ansammeln und Abgeben von Flüssigkeit unter Druck und den daraus folgenden Ausgleich unerwünschter Schwankungen der Flüssigkeits-Strömungsgeschwindigkeit innerhalb des Antriebskreises ausgebildet ist.

7. Die Schweißvorrichtung gemäß einem der obigen Ansprüche, **dadurch gekennzeichnet, dass** die feste Struktur (2) einen Rahmen umfasst, der eine im Wesentlichen quaderförmige Kontur hat und Folgendes umfasst: einen Basisabschnitt (2a), vier Säulen (2b), die sich im Wesentlichen an jeweiligen Ecken des Rahmens von dem Basisabschnitt (2a) erstrecken, und einen oberen Abschnitt (2c), der die Pumpe (6) trägt.

8. Die Schweißvorrichtung gemäß einem der obigen Ansprüche, **dadurch gekennzeichnet, dass** der Aufbau (3) einen Servomotor (15), vorzugsweise vom bürstenlosen Typ, umfasst, der für die Steuerung und Aktivierung der Pumpe (6) konfiguriert ist, vorzugsweise vom umkehrbaren Drehtyp mit vier Quadranten mit einer Verdrängung, die zwischen fest und variabel gewählt ist.

9. Die Schweißvorrichtung gemäß einem der obigen Ansprüche, **dadurch gekennzeichnet, dass** sie hermetische Dichtungsmittel, wie zum Beispiel O-Ringe (16) und dergleichen, umfasst, welche zwischen dem Zylinder (7) und dem Kolben (8) und zwischen benachbarten Kanälen (9a, 10a, 9b, 10b) jeder der Leitungen (9, 10) angeordnet sind.

10. Die Schweißvorrichtung gemäß einem der obigen Ansprüche, **dadurch gekennzeichnet, dass** sie mindestens einen an dem ersten Block (11A) montierten Druckmesswertwandler (17) umfasst.

## Revendications

1. Appareil de soudage, comportant une structure de support fixe (2) pour un ensemble (3) pour le déplacement d'au moins une électrode, qui peut être parcourue par un courant afin de réaliser des traitements par soudage, ledit ensemble de déplacement (3) comportant une pompe hydraulique (6) pour l'actionnement d'un actionneur hydraulique linéaire, comportant un cylindre creux (7) qui est rigidement supporté par ladite structure (2) et forme intérieurement un compartiment (7a) pour la réception au moins partielle d'un piston (8), qui supporte même indirectement ladite au moins une électrode et peut se déplacer avec un mouvement rectiligne alternatif afin de presser ladite électrode contre les pièces à souder, ledit actionneur étant activé par ladite pompe (6) au moyen d'un circuit d'actionnement hydraulique fermé qui peut être rempli d'un liquide,
**caractérisé en ce que** :
le circuit d'actionnement hydraulique fermé comporte ladite pompe (6), ledit compartiment (7a), un conduit de refoulement (9) et un conduit d'admission (10), lesdits conduits (9, 10) étant constitués respectivement d'une ou plusieurs paires de canaux intermédiaires distincts (9a, 10a), qui sont sensiblement mutuellement parallèles de manière correspondante à l'intérieur d'un ou plusieurs blocs perforés (11A, 11B, 11C) qui sont intercalés entre ladite pompe (6) et ledit cylindre (7), et d'une paire de canaux terminaux distincts (9b, 10b), qui sont sensiblement mutuellement parallèles dans la paroi latérale (7b) dudit cylindre (7) et mènent audit compartiment (7a),
et **en ce que** ledit piston (8) est sensiblement constitué d'une tige axialement symétrique qui est pourvue d'une partie centrale (8a) qui a une section transversale élargie et est maintenue en contact hermétique contre la surface interne dudit cylindre (7), et deux parties terminales (8b) qui ont les mêmes dimensions et sont agencées sur des côtés opposés par rapport à ladite partie centrale (8a).

2. Appareil de soudage selon la revendication 1, **caractérisé en ce qu'**il comporte au moins un premier bloc de réglage perforé (11A), qui est rigidement couplé à ladite structure (2) et est agencé au voisinage de ladite pompe (6), ledit premier bloc (11A) ayant une première paire de canaux intermédiaires (9a, 10a), respectivement dudit conduit de refoulement (9) et dudit conduit d'admission (10), et supportant une ou plusieurs vannes qui forment un circuit hydraulique pour la gestion du liquide à l'intérieur desdits conduits (9, 10).

3. Appareil de soudage selon la revendication 2, **caractérisé en ce qu'**il comporte un deuxième bloc de liaison perforé (11B), qui est intercalé entre ledit premier bloc (11A) et ledit cylindre (7) et est pourvu d'une deuxième paire desdits canaux intermédiaires (9a, 10a), respectivement dudit conduit de refoulement (9) et dudit conduit d'admission (10), ledit deuxième bloc (11B) étant pourvu d'une cavité interne (12) qui est alignée avec ledit compartiment (7a) et forme une extension dudit compartiment (7a), pour la réception partielle dudit piston (8) pendant son déplacement.

4. Appareil de soudage selon l'une des revendications précédentes, **caractérisé en ce qu'**il comporte un premier transducteur (13) configuré pour la détection facultativement indirecte de la position prise à chaque instant par ladite électrode.

5. Appareil de soudage selon les revendications 3 et 4, **caractérisé en ce qu'**il comporte un troisième bloc perforé (11C), qui est intercalé entre ledit premier bloc (11A) et ledit deuxième bloc (11B) et est sensiblement constitué d'une plaque qui a une troisième paire desdits canaux intermédiaires (9a, 10a), respectivement dudit conduit de refoulement (9) et dudit conduit d'admission (10), ledit troisième bloc (11C) recevant intérieurement ledit premier transducteur (13), qui est de préférence choisi du type d'un transducteur linéaire électronique.

6. Appareil de soudage selon l'une des revendications précédentes, **caractérisé en ce qu'**il comporte un accumulateur hydraulique (14), qui est monté sur l'un desdits blocs (11A, 11B, 11C) et est relié audit circuit d'actionnement, ledit accumulateur (14) étant configuré au moins pour l'accumulation et la libération de liquide sous pression et la compensation conséquente de variations de débit non voulues du liquide à l'intérieur dudit circuit d'actionnement.

7. Appareil de soudage selon l'une des revendications précédentes, **caractérisé en ce que** ladite structure fixe (2) comporte un bâti qui a un contour sensiblement parallélépipédique et comporte une section de base (2a), quatre montants (2b) qui s'étendent à partir de ladite section de base (2a) pratiquement sur des bords respectifs dudit bâti, et une section supérieure (2c), qui supporte ladite pompe (6).

8. Appareil de soudage selon l'une des revendications précédentes, **caractérisé en ce que** ledit ensemble (3) comporte un servomoteur (15), de préférence du type sans balai, configuré pour la commande et l'activation de ladite pompe (6), de préférence du type rotatif réversible avec quatre quadrants avec une cylindrée choisie entre fixe et variable.

9. Appareil de soudage selon l'une des revendications précédentes, **caractérisé en ce qu'**il comporte des moyens d'étanchéité hermétiques, tels que des joints toriques (16) et analogues, qui sont intercalés entre ledit cylindre (7) et ledit piston (8) et entre des canaux adjacents (9a, 10a, 9b, 10b) de chacun desdits conduits (9, 10).

10. Appareil de soudage selon l'une des revendications précédentes, **caractérisé en ce qu'**il comporte au moins un transducteur de pression (17) monté sur ledit premier bloc (11A).
